# FASCICULE DE BREVET EUROPEEN

(11) **EP 4 608 635 B1**
(45) Date de publication et mention de la délivrance du brevet: **17.06.2026**
(21) Numéro de dépôt: 23809699.4
(22) Date de dépôt: 16.10.2023
(51) Int. Cl.: B29C 70/24, B29B 11/16, B29D 99/00, D03D 15/267, D03D 15/275, D03D 25/00, B64C 11/26, B29C 70/48, B29L 31/08

(54) **AUBE OU PALE AVEC PIED REALISE PAR CROISEMENT DE TRAMES**
SCHAUFEL MIT EINEM DURCH KREUZENDE SCHUSSFÄDEN GEBILDETEN FUSS
BLADE OR VANE WITH A ROOT MADE BY CROSSING WEFT YARNS

(30) Priorité: 25.10.2022 FR 2211055
(43) Date de publication de la demande: 03.09.2025
(73) Titulaire: SAFRAN, 75015 Paris (FR)
(72) Inventeur: JOUDON, Vincent, 77550 MOISSY-CRAMAYEL (FR); MARCHAL, Yann, Didier, Simon, 77550 MOISSY-CRAMAYEL (FR); COLOT, Marc-Antoine, André, Louis, 77550 MOISSY-CRAMAYEL (FR); COUPE, Dominique, Marie, Christian, 77550 MOISSY-CRAMAYEL (FR); CHARLEUX, François, 77550 MOISSY-CRAMAYEL (FR)
(74) Mandataire: Cabinet Beau de Loménie
(86) Numéro de dépôt international: PCT/FR2023/051604
(87) Numéro de publication internationale: WO 2024/089338

(56) Documents cités:
- FR-A1- 3 091 724
- FR-A1- 3 098 226
- FR-A1- 3 120 249

## Description

### Domaine Technique

La présente invention se rapporte au domaine des aubes ou pales d'hélice pour aéronefs telles que celles présentes sur les turbopropulseurs.

### Technique antérieure

Les aubes ou pales d'hélice pour turbopropulseurs sont généralement réalisées en matériau métallique. Si les aubes ou pales d'hélice en matériau métallique ont une bonne résistance mécanique, elles présentent toutefois l'inconvénient d'avoir une masse relativement importante.

Afin d'obtenir des aubes ou pales d'hélice plus légères, il est connu de réaliser des aubes ou des pales d'hélice en matériau composite, c'est-à-dire en réalisant des pièces de structure à renfort fibreux densifié par une matrice.

Le document FR 3 098 226 A1 écrit un exemple de structure fibreuse de renfort d'une aube en matériau composite.

La nouvelle génération de moteurs nécessite des pieds d'aube ou de pale plus compacts. Ce besoin vient de la nécessité de pouvoir faire pivoter l'aube ou la pale autour de son axe vertical afin d'adapter son incidence au régime de vol. Ce besoin, combiné au fait que l'aube ou la pale doit être intégrée le plus bas possible sur le disque, impose de réduire fortement l'encombrement du pied.

A cet effet, les pieds des aubes ou pales de nouvelle génération présentent une forme axisymétrique ou sensiblement axisymétrique ainsi que des dimensions réduites contrairement aux pieds de l'art antérieur comme ceux décrits dans les documents US 2013/272893 et US 2013/0017093 qui s'étendent sur toute la largeur de la partie inférieure de l'aube ou de la pale. Le document FR 3 120 249 A1 décrit une aube pour soufflante non-carénée.

Cette forme axisymétrique ou quasi-axisymétrique est plus difficile à fabriquer en matériau composite, en particulier lorsque le tissage tridimensionnel est utilisé pour former le renfort fibreux de l'aube ou de la pale.

Par ailleurs, les chargements mécaniques auxquels sont soumis les pieds de nouvelle génération imposent des contraintes supplémentaires. En effet, en outre
des chargements mécaniques en traction et en flexion habituellement rencontrés, pouvant être causés respectivement par les efforts centrifuges et les impacts avec des objets, les pieds de nouvelle génération peuvent être soumis à un chargement vibratoire important en flexion du fait de l'absence de nacelle autour de l'aube ou de la pale pour conditionner le flux d'air. Afin de pouvoir contrer ce moment de flexion alternée, le pied est précontraint dans le moyeu ce qui génère un chargement mécanique supplémentaire en compression circonférentielle.

### Exposé de l'invention

Il est donc souhaitable de pouvoir proposer une solution pour la réalisation d'aubes ou pales d'hélice d'aéronef en matériau composite aptes à résister aux différents chargements mécaniques, en particulier au niveau du pied aux dimensions réduites.

A cet effet, la présente invention propose un procédé de fabrication d'une aube ou pale d'hélice en matériau composite comprenant un renfort fibreux densifié par une matrice, le procédé comprenant :
- la réalisation par tissage tridimensionnel entre une pluralité de fils de chaîne et une pluralité de fils de trame d'une ébauche fibreuse en une seule pièce, l'ébauche fibreuse présentant une forme plate dans laquelle les fils de chaîne s'étendent suivant une direction longitudinale correspondant à la direction d'envergure de l'aube ou la pale d'hélice à fabriquer et dans laquelle les fils de trame s'étendent suivant une direction transversale correspondant à la direction de corde de l'aube ou la pale d'hélice à fabriquer, l'ébauche fibreuse comprenant une partie de profil aérodynamique et une partie de pied destinées à former respectivement au moins une partie du renfort fibreux du profil aérodynamique et du pied de l'aube ou de la pale d'hélice,
- la mise en forme de l'ébauche fibreuse pour obtenir une préforme fibreuse en une seule pièce comprenant une préforme de profil aérodynamique formée par la partie de profil aérodynamique de l'ébauche fibreuse et une préforme de pied formée par la partie de pied de l'ébauche fibreuse,
- la densification de la préforme fibreuse par une matrice pour obtenir une aube ou une pale d'hélice en matériau composite ayant un renfort fibreux constitué par la préforme fibreuse et densifié par la matrice, et formant une seule pièce avec pied intégré,
caractérisé en ce que la partie de pied de l'ébauche fibreuse comprend une première déliaison délimitant un premier logement interne débouchant à une extrémité libre de ladite partie de pied et s'étendant suivant la direction longitudinale, et en ce que la partie de pied comporte au moins une sous-zone évolutive s'étendant depuis la partie de profil aérodynamique et dans laquelle une pluralité de fils de trame situés à l'intérieur de la partie de pied de l'ébauche fibreuse se croise de part et d'autre de la première déliaison suivant la direction transversale, le nombre de fils de trame se croisant de part et d'autre de la première déliaison suivant la direction transversale dans ladite sous-zone évolutive augmentant progressivement de la partie de profil aérodynamique vers l'extrémité libre de la partie de pied.

Par « fils de trame situés à l'intérieur de la partie de pied » ou « fils de trame intérieurs », on désigne les fils de trame qui ne sont pas présents en surface de la partie de pied de l'ébauche fibreuse.

On considère qu'une ébauche fibreuse réalisée par tissage tridimensionnel peut comprendre de manière bien connue du tissage bidimensionnel ou une autre armure de tissage à sa surface, afin d'améliorer son état de surface.

La réalisation de croisement de fils de trame au niveau de la partie de pied de l'ébauche fibreuse permet de conférer une certaine raideur circonférentielle au pied de l'aube. Ainsi, le pied de l'aube sera non seulement résistant aux efforts habituels en traction et en flexion, mais sera également résistant à la compression circonférentielle.

Par conséquent, l'aube présentera d'une part une grande raideur circonférentielle au niveau du pied, fortement soumis à la compression circonférentielle, tout en présentant d'autre part une grande raideur transversale au niveau du profil aérodynamique, peu soumis à la compression circonférentielle mais exposé à des contraintes en flexion et en traction plus fortes.

De manière plus globale, la continuité du tissage tridimensionnel entre le pied et le profil aérodynamique facilite la transmission des divers efforts sans créer d'interface mécaniquement faible. En outre, en diminuant progressivement le nombre de croisements de fils de trame à mesure que l'on s'approche de la partie de profil aérodynamique et que l'on s'éloigne de l'extrémité libre de la partie de pied, on s'assure une transition douce entre l'extrémité de la partie de pied qui présentera une grande raideur circonférentielle et la partie de profil aérodynamique qui présentera une raideur plutôt transversale.

Selon une caractéristique particulière de l'invention, la partie de pied comporte en outre une sous-zone d'extrémité, s'étendant entre l'extrémité libre de la partie de pied et la sous-zone évolutive, et dans laquelle la totalité des fils de trame intérieurs se croise de part et d'autre de la première déliaison suivant la direction transversale.

Un tel mode de tissage permet de conférer une grande robustesse au pied de l'aube fabriquée à partir de ladite ébauche, en assurant une excellente raideur circonférentielle au niveau de l'extrémité du pied, qui est la plus exposée à la compression circonférentielle. La sous-zone évolutive permet alors également de réaliser une transition plus douce entre d'une part la sous-zone d'extrémité, dans laquelle le croisement de la totalité des fils intérieurs permet d'obtenir une raideur majoritairement circonférentielle, et d'autre part la partie de profil aérodynamique dans laquelle la raideur est plutôt transversale.

Selon une caractéristique particulière de l'invention, la partie de profil aérodynamique de l'ébauche fibreuse comprend une deuxième et une troisième déliaisons délimitant un deuxième et un troisième logements internes débouchant sur un même bord de la partie de profil aérodynamique de l'ébauche de part et d'autre de la partie de pied de l'ébauche fibreuse suivant la direction transversale.

Ces déliaisons peuvent permettre d'insérer des éléments d'insertion fugaces ou légers dans l'ébauche, afin d'obtenir un profil aérodynamique d'aube ou de pale d'hélice plus léger, tout en étant sensiblement aussi robuste mécaniquement. En outre, comme le métier à tisser utilisé pour réaliser l'ébauche fibreuse ne permet pas de réaliser un pied ou un profil aérodynamique de très forte épaisseur, le ou les éléments d'insertion permettent d'augmenter l'épaisseur de la partie de pied ou de profil aérodynamique sans diminuer le taux volumique de fils dans les zones destinées à être fortement sollicitées mécaniquement.

Selon une caractéristique particulière de l'invention, la première déliaison s'étend également dans la partie de profil aérodynamique de l'ébauche fibreuse.

Ainsi, l'ébauche fibreuse comprend un logement interne présent à la fois dans la partie de pied et dans la partie de profil aérodynamique. Ainsi, le ou les éléments d'insertion insérés par la première déliaison pourront également permettre d'augmenter l'épaisseur de la partie de profil aérodynamique, en conservant un ratio chaîne/trame constant ainsi qu'un taux volumique de fils de chaîne important dans la zone autour dudit insert qui est fortement sollicitée en flexion. En effet, le métier à tisser utilisé pour réaliser l'ébauche fibreuse ne permet pas de réaliser un pied ou un profil aérodynamique de très forte épaisseur.

Selon une caractéristique particulière de l'invention, au plus six fils de trame par plan se croisent de part et d'autre de la première déliaison suivant la direction transversale dans la partie de profil aérodynamique de l'ébauche fibreuse. De préférence, uniquement deux fils de trame par plan se croisent de part et d'autre de la première déliaison suivant la direction transversale dans la partie de profil aérodynamique de l'ébauche fibreuse.

Ainsi, on obtient une aube qui permet une évolution très progressive de l'orientation de la raideur de l'extrémité du pied jusqu'à la tête : la raideur est majoritairement circonférentielle dans le pied d'aube, puis hybride dans la partie inférieure du profil aérodynamique qui comprend la première déliaison, et enfin majoritairement transversale dans la partie supérieure du profil aérodynamique qui ne comprend pas la première déliaison. La transition entre la raideur majoritairement circonférentielle du pied et celle majoritairement transversale dans la partie supérieure du profil aérodynamique se fait donc plus en douceur avec une zone de transition dans la partie inférieure du profil aérodynamique qui comporte la première déliaison.

Selon une caractéristique particulière de l'invention, l'ébauche fibreuse est réalisée par tissage tridimensionnel présentant une armure interlock.

L'utilisation d'un tissage tridimensionnel à armure interlock permet de réduire encore le risque de délaminage au sein de l'aube ou de l'hélice.

On considère qu'une ébauche fibreuse réalisée par tissage tridimensionnel présentant une armure interlock peut comprendre une autre armure de tissage à sa surface, par exemple bidimensionnelle ou multi-satin, afin d'améliorer son état de surface.

Selon une autre caractéristique particulière de l'invention, la mise en forme de l'ébauche fibreuse est réalisée par l'insertion d'un élément d'insertion dans chaque déliaison de l'ébauche fibreuse.

L'invention concerne en outre une aube ou une pale d'hélice en matériau composite comprenant un renfort fibreux densifié par une matrice, l'aube ou la pale d'hélice comportant suivant une direction longitudinale un pied et un profil aérodynamique, et s'étendant suivant une direction transversale entre un bord d'attaque et un bord de fuite, le renfort fibreux comprenant une préforme fibreuse présentant un tissage tridimensionnel en une seule pièce entre une pluralité de fils de chaîne s'étendant suivant la direction longitudinale et une pluralité de fils de trame s'étendant suivant la direction transversale, ladite préforme fibreuse comprenant une préforme de pied présente dans le pied et une préforme de profil aérodynamique présente dans le profil aérodynamique de l'aube ou de la pale d'hélice, l'aube ou la pale d'hélice étant caractérisée en en ce que la préforme de pied de la préforme fibreuse comprend une première déliaison délimitant un premier logement interne formant une cavité débouchant à une extrémité libre du pied et en ce que la préforme de pied comporte au moins une portion évolutive s'étendant depuis la préforme de profil aérodynamique et dans laquelle une pluralité de fils de trame situés à l'intérieur de la préforme de pied se croise de part et d'autre du premier logement interne suivant la direction transversale, le nombre de fils de trame se croisant de part et d'autre du premier logement interne suivant la direction transversale dans ladite portion évolutive augmentant progressivement de la préforme de profil aérodynamique vers l'extrémité libre de la préforme de pied.

Selon une caractéristique particulière de l'invention, la préforme de pied comporte en outre une portion d'extrémité, s'étendant entre l'extrémité libre de la préforme de pied et la portion évolutive, et dans laquelle la totalité des fils de trame intérieurs se croise de part et d'autre du premier logement interne suivant la direction transversale.

Selon une caractéristique particulière de l'invention, la préforme de profil aérodynamique de la préforme fibreuse comprend une deuxième et une troisième déliaisons délimitant un deuxième et un troisième logements internes débouchant sur un même bord de la préforme de profil aérodynamique de part et d'autre de la préforme de pied suivant la direction transversale.

Selon une autre caractéristique particulière de l'invention, le premier logement interne s'étend également dans la préforme de profil aérodynamique de la préforme fibreuse.

Selon une autre caractéristique particulière de l'invention, au plus six fils de trame par plan se croisent de part et d'autre du premier logement interne suivant la direction transversale dans la préforme de profil aérodynamique de la préforme fibreuse. De préférence, uniquement deux fils de trame par plan se croisent de part et d'autre du premier logement interne suivant la direction transversale dans la préforme de profil aérodynamique de la préforme fibreuse.

### Brève description des dessins

[Fig. 1] La figure 1 est une vue schématique illustrant le tissage 3D d'une ébauche fibreuse pour la fabrication d'une aube.
[Fig. 2] La figure 2 est une illustration schématique des zones de l'ébauche fibreuse de la figure 1.
[Fig. 3] La figure 3 est une vue schématique illustrant le tissage de l'ébauche fibreuse de la figure 2 selon un plan de coupe III-III.
[Fig. 4] La figure 4 est une vue schématique illustrant le tissage de l'ébauche fibreuse de la figure 2 selon un plan de coupe IV-IV.
[Fig. 5] La figure 5 est une vue schématique illustrant le tissage de l'ébauche fibreuse de la figure 2 selon un plan de coupe V-V.
[Fig. 6] La figure 6 est une vue schématique illustrant le tissage de l'ébauche fibreuse de la figure 2 selon un plan de coupe VI-VI.
[Fig. 7] La figure 7 est une vue schématique en perspective éclatée montrant un outillage d'injection et le placement de la préforme fibreuse obtenue à partir de l'ébauche fibreuse des figures 1 à 6 à l'intérieur de celui-ci conformément à un mode de réalisation de l'invention.
[Fig. 8] La figure 8 est une vue schématique en perspective montrant l'outillage d'injection de la figure 7 fermé.
[Fig. 9] La figure 9 est une vue schématique en coupe montrant un outillage d'injection à membrane flexible et le placement de la préforme fibreuse obtenue à partir de l'ébauche fibreuse des figures 1 à 6 à l'intérieur de celui-ci conformément à un mode de réalisation de l'invention.

### Description des modes de réalisation

L'invention s'applique d'une manière générale à différents types d'aubes ou pales d'hélice utilisées dans des moteurs d'aéronefs. L'invention trouve une application avantageuse mais non exclusive dans des aubes ou pales d'hélice de grandes dimensions qui sont destinées à être intégrées dans des systèmes de pivotement ou à pas variable.

De telles aubes ou pales d'hélice sont en général munies d'un pied présentant à la fois un faible encombrement et une bonne résistance vis-à-vis d'efforts en traction, en flexion et en compression circonférentielle. L'aube selon l'invention peut notamment constituer une aube pour roues mobiles non carénées comme dans les moteurs aéronautiques dits « open rotor ».

Dans la suite de la description, les exemples de réalisation sont décrits en relation avec des aubes pour turbopropulseur. Toutefois, les exemples de réalisation s'appliquent également à des pales d'hélice pour aéronefs.

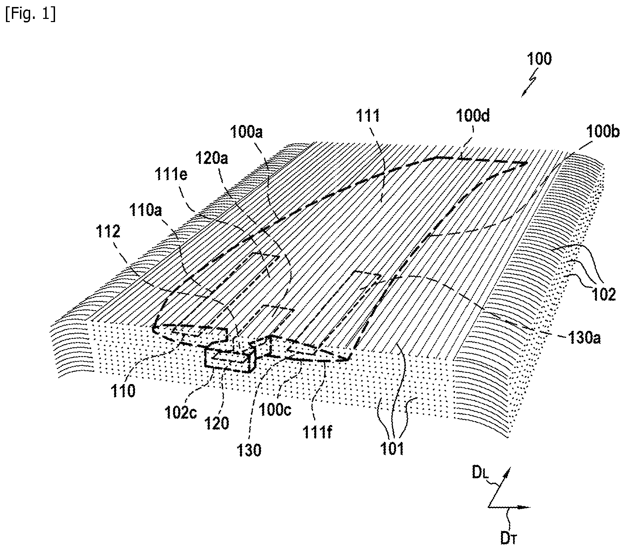

La figure 1 montre très schématiquement une ébauche fibreuse 100 destinée à former la préforme fibreuse 1 de l'aube à réaliser.

L'ébauche de structure fibreuse 100 est obtenue, comme illustrée schématiquement sur la figure 1, par tissage tridimensionnel (3D) réalisé de façon connue au moyen d'un métier à tisser de type jacquard sur lequel on a disposé un faisceau de fils de chaînes 101 ou torons en une pluralité de couches de plusieurs centaines de fils chacune, les fils de chaînes étant liés par des fils de trame 102. L'ébauche de structure fibreuse 100 est tissée en une seule pièce, l'ébauche s'étendant dans une direction longitudinale D_{L}, correspondant à la direction d'envergure de l'aube à fabriquer, et dans une direction transversale D_{T}, correspondant à la direction de corde de l'aube à fabriquer entre un bord avant 100a et un bord arrière 100b.

L'ébauche 100 comprend une partie de profil aérodynamique 111 destinée à former ultérieurement une partie du profil aérodynamique de l'aube et définissant une première face 111e et une deuxième face 111f destinées à former respectivement les faces extrados et intrados de l'aube. Ainsi, la partie de profil aérodynamique 111 s'étend dans la direction longitudinale D_{L} entre un bord inférieur 100c et un bord supérieur 100d.

L'ébauche fibreuse 100 comprend en outre une partie de pied 112 destinée à former ultérieurement une partie du pied d'aube, et s'étendant à l'extérieur de la partie de profil aérodynamique 111 suivant la direction longitudinale D_{L} jusqu'à un bord inférieur 102c et en retrait des bords avant et arrière 100a et 100b suivant la direction transversale D_{T}. Le bord inférieur 102c de la partie de pied 112 correspond à une extrémité libre de ladite partie de pied 112.

De préférence, comme dans l'exemple illustré, le tissage 3D est un tissage à armure "interlock". Par tissage "interlock", on entend ici une armure de tissage dans laquelle chaque couche de fils de trame lie plusieurs couches de fils de chaîne avec tous les fils d'une même colonne de trame ayant le même mouvement dans le plan de l'armure.

D'autres types de tissage tridimensionnel connus pourront être utilisés, comme notamment ceux décrits dans le document WO 2006/136755. Ce document décrit notamment la réalisation par tissage en une seule pièce de structures fibreuses de renfort pour des pièces telles que des aubes ayant un premier type d'armure à cœur et un deuxième type d'armure en peau qui permettent de conférer à la fois les propriétés mécaniques et aérodynamiques attendues pour ce type de pièce.

L'ébauche fibreuse 100 peut comporter une pluralité de fils de diverses natures, en particulier des fils en céramique ou en carbone ou encore un mélange de tels fils. De préférence, l'ébauche fibreuse 100 peut être réalisée à partir de fibres en carbure de silicium. De manière générale, l'ébauche fibreuse 100 peut également être réalisée à partir de fibres constituées des matériaux suivants : l'alumine, la mullite, la silice, un aluminosilicate, un borosilicate, du carbone, ou un mélange de plusieurs de ces matériaux.

Au fur et à mesure du tissage de l'ébauche fibreuse 100 dont l'épaisseur et la largeur varient, un certain nombre de fils de chaîne ne sont pas tissés, ce qui permet de définir le contour et l'épaisseur voulue, continûment variable, de l'ébauche 100. Un exemple de tissage 3D évolutif permettant notamment de faire varier l'épaisseur de l'ébauche 100 entre un premier bord destiné à former le bord d'attaque et un deuxième bord d'une épaisseur moindre et destiné à former le bord de fuite est décrit dans le document US 2006/257260. De préférence, on diminue l'épaisseur du bord de fuite ou de bord d'attaque par sortie de couches de trames présentes à l'intérieur de l'ébauche fibreuse et non à l'extérieur, afin de conserver une continuité des trames situées en surface de l'ébauche fibreuse. Ainsi, l'aube finale comprendra un renfort fibreux avec une raideur en flexion plus satisfaisante dans la direction transversale D_{T} et donc plus favorable en cas d'impact, par exemple en cas d'impact d'oiseau.

Conformément à l'invention, lors du tissage, une première déliaison 120 est réalisée au moins à l'intérieur de la partie de pied 112 de l'ébauche fibreuse 100. De préférence, trois déliaisons sont réalisées à l'intérieur de l'ébauche fibreuse 100. En effet, une deuxième déliaison 110 est réalisée à l'intérieur de la partie de profil aérodynamique 111 de l'ébauche fibreuse 100 et une troisième déliaison 130 est réalisée à l'intérieur de la partie de profil aérodynamique 111 de l'ébauche fibreuse 100. Les trois déliaisons 110, 120 et 130 s'étendent suivant un plan parallèle à la surface de l'ébauche 100. La deuxième déliaison 110 et la troisième déliaison 130 réalisées à l'intérieur de la partie de profil aérodynamique 111 sont situées de part et d'autre de la première déliaison 120 réalisée au moins à l'intérieur de la partie de pied 112. Ainsi, la deuxième déliaison 110, la première déliaison 120 et la troisième déliaison 130 sont disposées dans cet ordre suivant la direction transversale D_{T}.

La première déliaison 120 s'étend dans l'ébauche fibreuse 100 sur une première zone de déliaison délimitée par un contour 120a. Ainsi, la première déliaison 120 s'étend dans la partie de pied 112 sur au moins une première portion de la deuxième zone de déliaison délimitée par le contour 120a. La première déliaison 120 s'étend ainsi au travers de la partie de pied 112 de l'ébauche 100.

Dans la partie de pied 112 de l'ébauche 100, la première déliaison 120 s'étend suivant la direction transversale D_{T} entre le bord avant 100a et le bord arrière 100b. De préférence, la première déliaison 120 s'étend en retrait des bords avant et arrière 100a et 100b, c'est-à-dire que la première déliaison 120 ne débouche pas sur les bords avant et arrière 100a et 100b.

Dans la partie de pied 112 de l'ébauche 100, la première déliaison 120 s'étend suivant la direction longitudinale D_{L} entre le bord inférieur 100c de la partie de profil aérodynamique 111 et le bord inférieur 102c de la partie de pied, et débouche sur le bord inférieur 102c de la partie de pied. La première déliaison 120 peut s'étendre en retrait du bord inférieur 100c de la partie de profil aérodynamique 111, c'est-à-dire qu'elle ne débouche dans la partie de profil aérodynamique 111 de l'ébauche 100.

Toutefois, de préférence, la première déliaison 120 s'étend également dans la partie de profil aérodynamique 111 de l'ébauche 100. Ainsi, la première déliaison 120 s'étend dans la partie de profil aérodynamique 111 sur une deuxième portion de la première zone de déliaison délimitée par le contour 120a.

Dans ce cas, dans la partie de profil aérodynamique 111, la première déliaison 120 s'étend suivant la direction transversale D_{T} entre le bord avant 100a et le bord arrière 100b. De préférence, la première déliaison 120 s'étend en retrait des bords avant et arrière 100a et 100b, c'est-à-dire que la première déliaison 120 ne débouche pas sur les bords avant et arrière 100a et 100b. On ne sort bien entendu pas du cadre de l'invention si la première déliaison 120 débouche sur le bord avant 100a et/ou sur le bord arrière 100b. En outre, dans la partie de profil aérodynamique 111, la première déliaison 120 s'étend suivant la direction longitudinale D_{L} entre le bord inférieur 100c et le bord supérieur 100d. La première déliaison 120 débouche évidemment sur ledit bord inférieur 100c, afin de déboucher dans la partie de pied 112. De préférence, la première déliaison 120 s'étend suivant la direction longitudinale D_{L} en retrait du bord supérieur 100d, c'est-à-dire que la première déliaison 120 ne débouche pas sur le bord supérieur 100d.

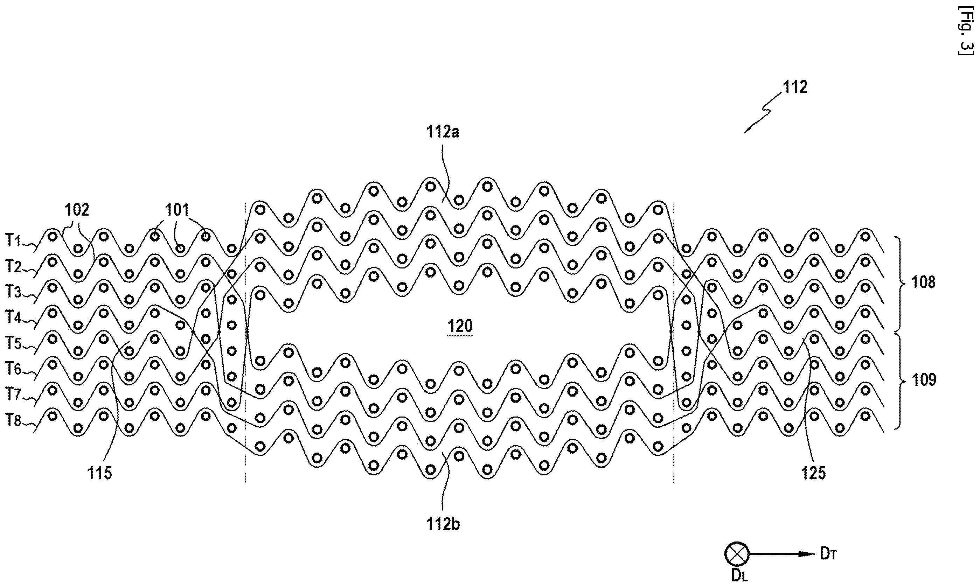

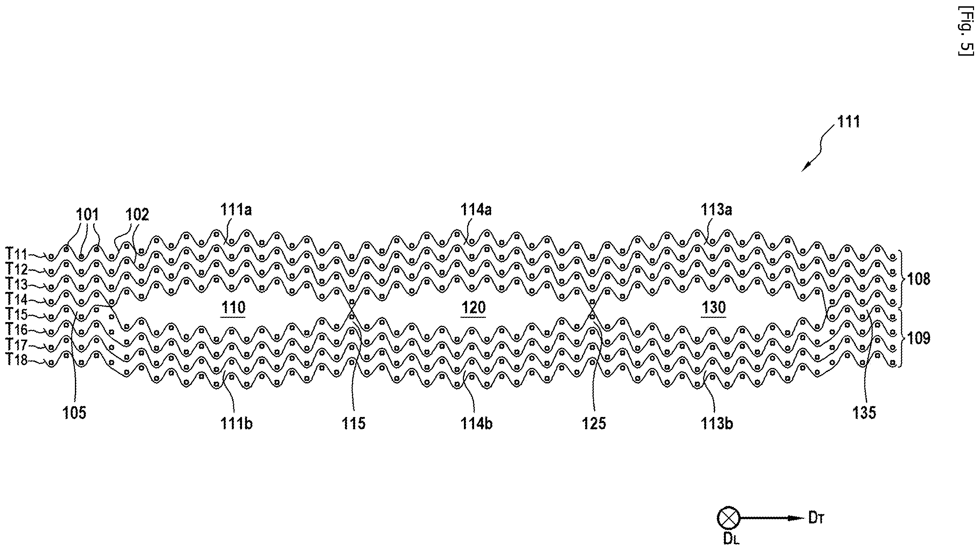

Ainsi, la première déliaison 120 sépare localement la partie de pied 112 en deux portions tissées 112a et 112b disposées de part et d'autre de la première déliaison 120 suivant la direction d'épaisseur de l'ébauche 100, c'est-à-dire suivant la direction perpendiculaire aux directions transversale D_{T} et longitudinale D_{L}, comme illustré sur la figure 3. Dans l'exemple illustré, la première déliaison 120 sépare localement la partie de profil aérodynamique 111 en une cinquième portion tissée 114a et une sixième portion tissée 114b disposées de part et d'autre de la première déliaison 120 suivant la direction d'épaisseur de l'ébauche 100, c'est-à-dire suivant la direction perpendiculaire aux directions transversale D_{T} et longitudinale D_{L}, comme illustré sur la figure 5.

La deuxième déliaison 110 s'étend dans la partie de profil aérodynamique 111 sur une deuxième zone de déliaison délimitée par un contour 110a. La déliaison 110 sépare ainsi localement la partie de profil aérodynamique 111 en une première portion tissée, comprenant une partie de la première face 111e destinée à former la face extrados, et une deuxième portion tissée, comprenant une partie de la deuxième face 111f destinée à former la face intrados.

La deuxième déliaison 110 s'étend suivant la direction transversale D_{T} entre le bord avant 100a et le bord arrière 100b, et en retrait du bord arrière 100b, c'est-à-dire que la deuxième déliaison 110 ne débouche pas sur le bord arrière 100b. De préférence, la deuxième déliaison 110 s'étend suivant la direction transversale D_{T} en retrait du bord avant 100a, c'est-à-dire que la deuxième déliaison 110 ne débouche pas sur le bord avant 100a. De préférence, tout point appartenant à la deuxième déliaison 110 est plus proche du bord avant 100a que du bord arrière 100b suivant la direction transversale D_{T}.

Dans la partie de profil aérodynamique 111, la deuxième déliaison 110 s'étend suivant la direction longitudinale D_{L} entre le bord inférieur 100c et le bord supérieur 100d. La deuxième déliaison 110 débouche sur ledit bord inférieur 100c, la deuxième déliaison 110 débouchant sur ledit bord inférieur 100c entre le bord avant 100a et la jonction entre la partie de pied 112 et la partie de profil aérodynamique 111. De préférence, la deuxième déliaison 110 s'étend suivant la direction longitudinale D_{L} en retrait du bord supérieur 100d, c'est-à-dire que la première déliaison 110 ne débouche pas sur le bord supérieur 100d.

Ainsi, la deuxième déliaison 110 sépare localement la partie de profil aérodynamique 111 en deux portions tissées 111a et 111b disposées de part et d'autre de la deuxième déliaison 110 suivant la direction d'épaisseur de l'ébauche 100, c'est-à-dire suivant la direction perpendiculaire aux directions transversale D_{T} et longitudinale D_{L}.

La troisième déliaison 130 s'étend dans la partie de profil aérodynamique 111 sur une troisième zone de déliaison délimitée par un contour 130a. La déliaison 130 sépare ainsi localement la partie de profil aérodynamique 111 en la première portion tissée, comprenant une partie de la première face 111e destinée à former la face extrados, et la deuxième portion tissé, comprenant une partie de la deuxième face 111f destinée à former la face intrados.

La troisième déliaison 130 s'étend suivant la direction transversale D_{T} entre le bord avant 100a et le bord arrière 100b, et en retrait du bord avant 100a, c'est-à-dire que la troisième déliaison 130 ne débouche pas sur le bord avant 100a. De préférence, la troisième déliaison 130 s'étend suivant la direction transversale D_{T} en retrait du bord arrière 100b, c'est-à-dire que la troisième déliaison 130 ne débouche pas sur le bord arrière 100b. De préférence, tout point appartenant à la troisième déliaison 130 est plus proche du bord arrière 100b que du bord avant 100a suivant la direction transversale D_{T}.

Dans la partie de profil aérodynamique 111, la troisième déliaison 130 s'étend suivant la direction longitudinale D_{L} entre le bord inférieur 100c et le bord supérieur 100d. La troisième déliaison 130 débouche sur ledit bord inférieur 100c, la troisième déliaison 130 débouchant sur ledit bord inférieur 100c entre le bord arrière 100b et la jonction entre la partie de pied 112 et la partie de profil aérodynamique 111. De préférence, la troisième déliaison 130 s'étend suivant la direction longitudinale D_{L} en retrait du bord supérieur 100d, c'est-à-dire que la déliaison 110 ne débouche pas sur le bord supérieur 100d.

Ainsi, la troisième déliaison 130 sépare localement la partie de profil aérodynamique 111 en deux portions tissées 113a et 113b disposées de part et d'autre de la troisième déliaison 130 suivant la direction d'épaisseur de l'ébauche 100, c'est-à-dire suivant la direction perpendiculaire aux directions transversale D_{T} et longitudinale D_{L}, comme illustré sur la figure 5.

De préférence, dans la partie de profil aérodynamique 111, la deuxième déliaison 110 et la troisième déliaison 130 s'étendent sur une plus grande longueur suivant la direction longitudinale D_{L} que la première déliaison 120.

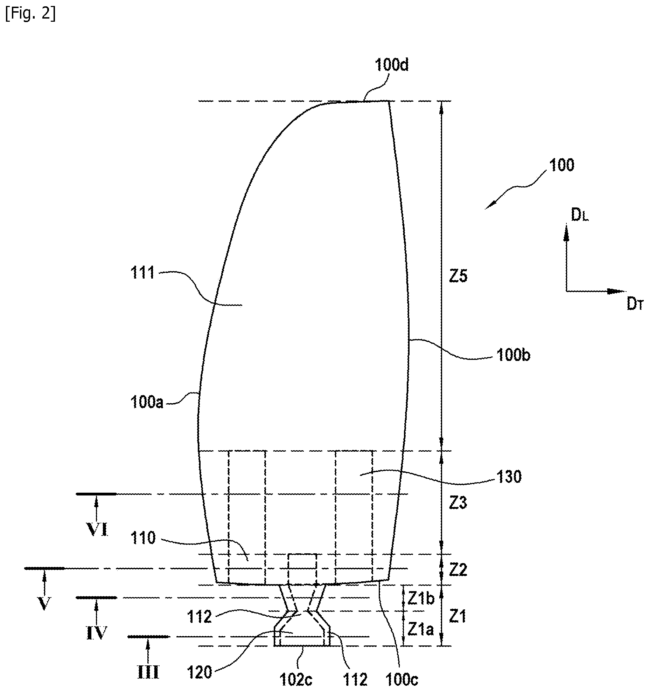

L'ébauche fibreuse 100 est ainsi composée de plusieurs zones successives s'étendant dans toute la largeur de l'ébauche fibreuse 100 selon la direction transversale D_{T} et se succédant suivant la direction longitudinale D_{L}, comme illustré sur la figure 2.

La première zone Z1 de l'ébauche fibreuse 100 correspond à la zone de la partie de pied 112 de l'ébauche fibreuse 100. La première zone Z1 s'étend ainsi dans toute la largeur de la partie de pied 112 de l'ébauche fibreuse 100 suivant la direction transversale D_{T}, et s'étend entre le bord inférieur 102c de la partie de pied 112 et le bord inférieur 100c de la partie de profil aérodynamique 111. Ainsi, la première zone Z1 ne comporte pour seule déliaison que la première déliaison 120.

La première zone Z1 comprend une première sous-zone Z1a, dite « sous-zone d'extrémité » qui comprend l'extrémité libre de la partie de pied 112, c'est-à-dire que la première sous-zone Z1a s'étend depuis le bord inférieur 102c de la partie de pied 112. La première zone Z1 comprend également une deuxième sous-zone Z1b, dite « sous-zone évolutive », qui s'étend depuis le bord inférieur 100c de la partie de profil aérodynamique 111. De préférence, la première sous-zone Z1a et la deuxième sous-zone Z1b sont adjacentes, et se suivent suivant la direction longitudinale D_{L}. De préférence, lorsque la partie de pied 112 présente une forme de sablier comme illustré sur la figure 2, la section de plus petite épaisseur dudit sablier, qui correspond au col du pied de l'aube 112, réalise la délimitation entre la première sous-zone Z1a et la deuxième sous-zone Z1b.

La deuxième zone Z2 correspond à la zone de la partie de profil aérodynamique de pale 111 dans laquelle sont présentes les trois déliaisons 110, 120 et 130, dans le cas où la première déliaison 120 s'étend également dans la partie de profil aérodynamique 111. La deuxième zone Z2 s'étend ainsi dans toute la largeur de la partie de profil aérodynamique 111 de l'ébauche fibreuse 100 suivant la direction transversale D_{T}, et s'étend à partir du bord inférieur 100c de la partie de profil aérodynamique 111. Ainsi, si elle existe, la deuxième zone Z2 comporte la deuxième déliaison 110, la première déliaison 120 et la troisième déliaison 130, comme illustré sur la figure 2.

La troisième zone Z3 de l'ébauche fibreuse 100 correspond à la zone de la partie de profil aérodynamique de pale 111 dans laquelle sont présentes deux déliaisons, si cette zone existe. De préférence, la troisième zone correspond à la zone de la partie de profil aérodynamique de pale 111 dans laquelle sont présentes la deuxième déliaison 110 et la troisième déliaison 130, comme illustré dans l'exemple de la figure 2, la première déliaison 120 ne s'étendant pas au-delà de la première zone Z1 ou de la deuxième zone Z2. On ne sort bien entendu pas du cadre de l'invention si la troisième zone Z3 correspond à la zone de la partie de profil aérodynamique de pale 111 dans laquelle sont présentes la deuxième déliaison 110 et la première déliaison 120, ou la première déliaison 120 et la troisième déliaison 130, si cette zone existe.

La quatrième zone Z4 de l'ébauche fibreuse 100 correspond à la zone de la partie de profil aérodynamique de pale 111 dans laquelle n'est présente qu'une unique déliaison, si cette zone existe. De préférence, l'ébauche fibreuse 100 ne comprend pas de quatrième zone Z4, comme c'est le cas sur l'exemple de la figure 2. Si l'ébauche fibreuse 100 comprend une quatrième zone Z4, la quatrième zone Z4 comprend la deuxième déliaison 110 ou la troisième déliaison 130. On ne sort toutefois pas du cadre de l'invention si la quatrième zone Z4 correspond à la zone de la partie de profil aérodynamique de pale 111 dans laquelle est présente uniquement la première déliaison 120, si cette zone existe.

La cinquième zone Z5 de l'ébauche fibreuse 100 correspond à la zone de la partie de profil aérodynamique de pale 111 ne comprenant pas de déliaison. La cinquième zone Z5 s'étend ainsi dans toute la largeur de la partie de profil aérodynamique de l'ébauche fibreuse 100 suivant la direction transversale D_{T}, et s'étend jusqu'au bord supérieur 100d de la partie de profil aérodynamique 111.

Un mode de tissage 3D à armure interlock de la première ébauche 100 selon l'invention est montré schématiquement sur les figures 3 à 6. Le nombre de fils de trame schématisés est réduit pour des raisons de simplification des figures.

La figure 3 est une vue partielle agrandie d'un plan en coupe chaîne dans la première sous-zone Z1a de la première zone Z1 de l'ébauche fibreuse 100 (coupe III-III sur la figure 2). Dans cet exemple, l'ébauche fibreuse 100 comprend 8 couches de fils de chaîne 101 s'étendant sensiblement dans la direction longitudinale D_{L}. Les 8 couches de fils de chaîne 101 sont liées par des fils de trame T₁ à T₈ dans les zones de liaison 115 et 125 de la partie de pied 112 de l'ébauche fibreuse 100, les fils de trame T₁ à T₈ s'étendant sensiblement dans la direction transversale D_{T}.

Les 8 couches de fils de chaîne 101 sont réparties en un premier ensemble 108 de couches de fils 101 et un deuxième ensemble 109 de couches de fils 101. Le premier ensemble 108 et le deuxième ensemble 109 de couches de fils de chaîne 101 sont disposés de part et d'autre de la première déliaison 120 suivant la direction d'épaisseur, c'est-à-dire suivant la direction perpendiculaire aux directions transversale D_{T} et longitudinale D_{L}. Ainsi, la première portion tissée 112a de la partie de pied 112 comprend une partie du premier ensemble 108 de fils de chaîne 101 et la deuxième portion tissée 112b de la partie de pied 112 comprend une partie du deuxième ensemble 109 de fils de chaîne. Le premier ensemble 108 et le deuxième ensemble 109 de couches de fils de chaîne 101 se joignent dans les zones de liaison 115 et 125.

Comme illustré sur la figure 3, dans la première sous-zone Z1a de la première zone Z1, la totalité des couches de fils de trame T₂ à T₇ intérieures se croise de part et d'autre de la première déliaison 120 suivant la direction transversale. En revanche, les couches de fils de trame T₁, T₈ extérieures, c'est-à-dire celles situées en surface de l'ébauche fibreuse 100, ne croisent pas d'autres couches de fils de trame, afin d'assurer un meilleur état de surface. On ne sort bien entendu pas du cadre de l'invention si la totalité des couches de fils de trame, intérieurs et extérieurs, se croise de part et d'autre de la première déliaison 120 suivant la direction transversale.

Ainsi, dans la première sous-zone Z1a de la première zone Z1, chaque fil de trame intérieur croise les autres fils de trame dans la première zone de liaison 115 et dans la deuxième zone de liaison 125. La totalité des fils de trame intérieurs est donc déviée au début ou en amont de la première déliaison 120 suivant la direction transversale D_{T}, puis déviée à nouveau à la sortie ou en aval de la première déliaison 120 suivant la direction transversale D_{T}. Ainsi, les couches de fils de trame T₂ à T₄ lient le premier ensemble 108 de fils de chaîne 101 dans la première zone de liaison 115, puis lient le deuxième ensemble 109 de fils de chaîne 101 dans la deuxième portion tissée 112b et enfin lient le premier ensemble 108 de fils de chaîne 101 dans la deuxième zone de liaison 125. A l'inverse, les couches de fils de trame T₅ à T₇ lient le deuxième ensemble 109 de fils de chaîne 101 dans la première zone de liaison 115, puis lient le premier ensemble 108 de fils de chaîne 101 dans la première portion tissée 112a et enfin lient le deuxième ensemble 109 de fils de chaîne 101 dans la deuxième zone de liaison 125.

Un tel croisement des fils de trame dans la partie de pied 112 améliore la tenue de l'ébauche fibreuse 100 autour de la première déliaison 120, et permet ultérieurement de conférer une excellente raideur circonférentielle au pied de l'aube.

La première zone Z1 comprend également la deuxième sous-zone Z1b qui s'étend depuis le bord inférieur 100c de la partie de profil aérodynamique 111. Une telle deuxième sous-zone Z1b permet de réaliser une transition entre d'une part la première sous-zone Z1a dans laquelle la totalité des fils de trame intérieurs se croise et d'autre part la partie de profil aérodynamique dans laquelle le pourcentage de fils de trame qui se croise est très réduit. Ainsi, la deuxième sous-zone Z1b présente un pourcentage de croisement des fils de trame de part et d'autre de la première déliaison 120 progressif suivant la direction longitudinale D_{L}. Plus précisément, la deuxième sous-zone Z1b présente un pourcentage de croisement des fils de trame qui diminue progressivement depuis la première sous-zone Z1a de la partie de pied 112 jusqu'à la partie de profil aérodynamique 111. On évite ainsi une transition brutale entre la partie de pied 112 et la partie de profil aérodynamique 111. Par conséquent, on obtient une aube présentant une évolution progressive de l'orientation de la raideur entre le pied et le profil aérodynamique : la raideur est fortement circonférentielle dans l'extrémité du pied d'aube, puis de moins en moins circonférentielle de plus en plus transversale à mesure que l'on se rapproche de la partie de profil aérodynamique. Toutefois, la raideur du pied d'aube reste plus circonférentielle et moins transversale que celle du profil aérodynamique. La transition entre la raideur majoritairement circonférentielle de l'extrémité du pied et celle majoritairement transversale dans la partie supérieure du profil aérodynamique se fait donc plus en douceur.

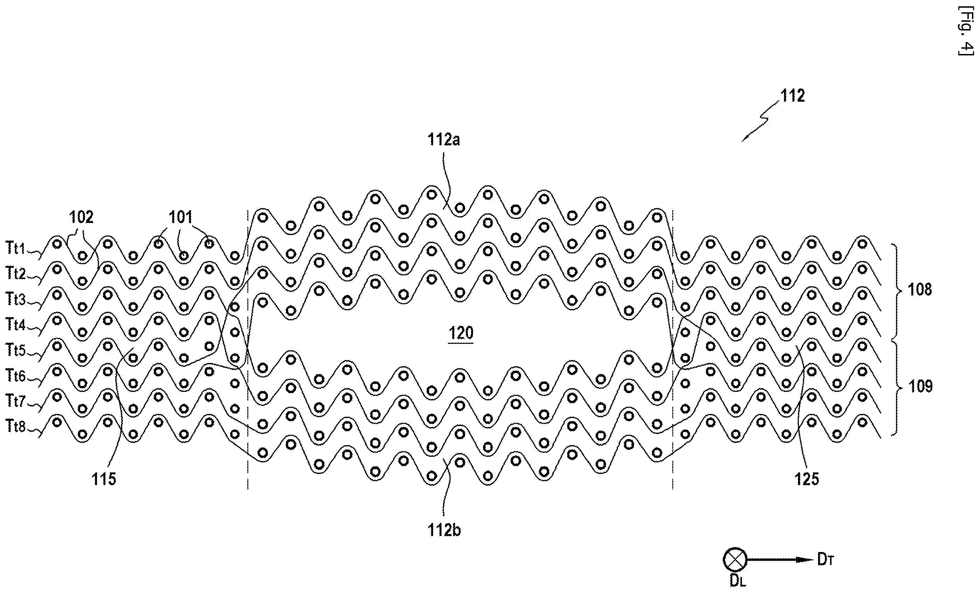

La figure 4 est une vue partielle agrandie d'un plan en coupe chaîne dans la deuxième sous-zone Z1b de la première zone Z1 de l'ébauche fibreuse 100 (coupe IV-IV sur la figure 2). Dans la deuxième sous-zone Z1b de la première zone Z1, les 8 couches de fils de chaîne 101 sont liées par des fils de trame Tₜ₁ à Tₜ₈ dans les zones de liaison 115 et 125 de la partie de pied 112 de l'ébauche fibreuse 100, les fils de trame Tₜ₁ à Tₜ₈ s'étendant sensiblement dans la direction transversale D_{T}.

Comme illustré sur la figure 4, dans la deuxième sous-zone Z1b de la première zone Z1, seulement une partie des couches de fils de trame Tₜ₂ à Tₜ₇ intérieures se croise de part et d'autre de la première déliaison 120 suivant la direction transversale. Les couches de fils de trame Tₜ₁ et Tₜ₈ extérieures, c'est-à-dire celles situées en surface de l'ébauche fibreuse 100, ne croisent pas d'autres couches de fils de trame, afin d'assurer un meilleur état de surface.

Ainsi, dans la deuxième sous-zone Z1b de la première zone Z1, seulement un pourcentage de fils de trame intérieurs croise les autres fils de trame dans la première zone de liaison 115 et dans la deuxième zone de liaison 125. Seul un pourcentage des fils de trame intérieurs est donc dévié au début ou en amont de la première déliaison 120 suivant la direction transversale D_{T}, puis déviée à nouveau à la sortie ou en aval de la première déliaison 120 suivant la direction transversale D_{T}.

Ainsi, les couches de fils de trame Tₜ₃ et Tₜ₄ lient le premier ensemble 108 de fils de chaîne 101 dans la première zone de liaison 115, puis lient le deuxième ensemble 109 de fils de chaîne 101 dans la deuxième portion tissée 112b et enfin lient le premier ensemble 108 de fils de chaîne 101 dans la deuxième zone de liaison 125. A l'inverse, les couches de fils de trame Tₜ₅ et Tₜ₆ lient le deuxième ensemble 109 de fils de chaîne 101 dans la première zone de liaison 115, puis lient le premier ensemble 108 de fils de chaîne 101 dans la première portion tissée 112a et enfin lient le deuxième ensemble 109 de fils de chaîne 101 dans la deuxième zone de liaison 125. Dans l'exemple illustré sur la figure 4, pour des raisons de simplification des figures, seuls quatre fils de trame se croisent de part et d'autre de la première déliaison 120. De préférence, plus de fils de trame se croisent de part et d'autre de la première déliaison 120 afin d'assurer une raideur circonférentielle suffisante dans le futur pied d'aube.

De préférence, dans la deuxième sous-zone Z1b de première zone Z1, le pourcentage de fils de trame intérieurs se croisant de part et d'autre de la première déliaison 120 varie progressivement de 100% à la jonction avec la première sous-zone Z1a jusqu'à entre 5% et 30% à la jonction avec la partie de profil aérodynamique 111.

La figure 5 est une vue partielle agrandie d'un plan en coupe chaîne dans la deuxième zone Z2 de l'ébauche fibreuse 100 (coupe V-V sur la figure 2). Dans la deuxième zone Z2, les 8 couches de fils de chaîne 101 sont liées par des fils de trame T₁₁ à T₁₈ dans les zones de liaison 105, 115, 125 et 135 de la partie de profil aérodynamique 111 de l'ébauche fibreuse 100, les fils de trame T₁₁ à T₁₈ s'étendant sensiblement dans la direction transversale D_{T}.

Le premier ensemble 108 et le deuxième ensemble 109 de couches de fils de chaîne 101 sont disposés de part et d'autre de la deuxième déliaison 110, de la première déliaison 120 et de la troisième déliaison 130 suivant la direction d'épaisseur, c'est-à-dire suivant la direction perpendiculaire aux directions transversale D_{T} et longitudinale D_{L}.

Ainsi, la première portion tissée 111a, la troisième portion tissée 113a et la cinquième portion tissée 114a de la partie de profil aérodynamique 111 comprennent chacune une partie du premier ensemble 108 de fils de chaîne 101, et la deuxième portion tissée 111b, la quatrième portion tissée 113b et la sixième portion tissée 114b de la partie de profil aérodynamique 111 comprennent chacune une partie du deuxième ensemble 109 de fils de chaîne. Le premier ensemble 108 et le deuxième ensemble 109 de couches de fils de chaîne 101 se joignent dans les zones de liaison 105, 115, 125 et 135.

La première zone de liaison 115 sépare la deuxième déliaison 110 de la première déliaison 120. La deuxième zone de liaison 125 sépare la première déliaison 120 de la troisième déliaison 130. La troisième zone de liaison 105 comprend une partie du bord avant 100a. La quatrième zone de liaison 135 comprend une partie du bord arrière 100b. Ainsi la troisième zone de liaison 105, la deuxième déliaison 110, la première zone de liaison 115, la première déliaison 120, la deuxième zone de liaison 125, la troisième déliaison 130 et la quatrième zone de liaison 135 se succèdent dans cet ordre selon la direction transversale D_{T} dans la deuxième zone Z2.

Comme illustré sur la figure 5, seuls deux fils de trame T14, T15 par plan se croisent, ces deux fils étant situés à cœur de la partie de profil aérodynamique 111 et traversant la partie de profil aérodynamique 111 sensiblement suivant la direction transversale D_{T} le long des frontières des première, deuxième et troisième déliaison 110, 120, 130. De préférence, six fils de trame au plus par plan se croisent dans la deuxième zone Z2, de préférence le long des frontières des première, deuxième et troisième déliaison 110, 120, 130.

Dans l'exemple illustré sur la figure 5, pour des raisons de simplification, l'espace entre chaque déliaison 110, 120, 130 est très restreint. De préférence, on peut garder un espace plus important entre chaque déliaison 110, 120, 130 afin de réaliser le tissage tridimensionnel des fibres convenablement. Des trames supplémentaires peuvent être insérées dans ces espaces entre les déliaisons 110, 120, 130 afin de compenser le manque d'épaisseur provoqué par l'absence de déliaison.

Ainsi, dans la deuxième zone Z2, les deux fils de trame T₁₄, T₁₅ se croisent au moins dans la première zone de liaison 115 et dans la deuxième zone de liaison 125. De préférence, les deux fils de trame T₁₄, T₁₅ se croisent également dans la troisième zone de liaison 105 et dans la quatrième zone de liaison 135, comme illustré dans l'exemple de la figure 5. Les deux fils de trame T₁₄, T₁₅ sont donc déviés au début ou en amont de la première déliaison 120 suivant la direction transversale D_{T}, puis déviés à nouveau à la sortie ou en aval de la première déliaison 120 suivant la direction transversale D_{T}.

Ainsi, les fils de trame T₁₁ à T₁₃ lient le premier ensemble 108 de fils de chaîne 101 dans toute la largeur de la partie de profil aérodynamique 111 suivant la direction transversale D_{T}. Les fils de trame T₁₁ à T₁₃ lient donc le premier ensemble 108 de fils de chaîne 101 dans la troisième zone de liaison 105, dans la première portion tissée 111a, dans la première zone de liaison 115, dans la cinquième portion tissée 114a, dans la deuxième zone de liaison 125, dans la troisième portion tissée 113a et dans la quatrième zone de liaison 135.

A l'inverse, les fils de trame T₁₆ à T₁₈ lient le deuxième ensemble 109 de fils de chaîne 101 dans toute la largeur de la partie de profil aérodynamique 111 suivant la direction transversale D_{T}. Les fils de trame T₁₆ à T₁₈ lient donc le deuxième ensemble 109 de fils de chaîne 101 dans la troisième zone de liaison 105, dans la deuxième portion tissée 111b, dans la première zone de liaison 115, dans la sixième portion tissée 114b, dans la deuxième zone de liaison 125, dans la quatrième portion tissée 113b et dans la quatrième zone de liaison 135.

Un tel croisement partiel des fils de trame dans la partie inférieure de la partie de profil aérodynamique 111 améliore la tenue de l'ébauche fibreuse 100 autour des trois déliaisons 110, 120 et 130, et permet ultérieurement de conférer une transition douce entre la raideur circonférentielle du pied de l'aube et la raideur transversale du haut du profil aérodynamique, en proposant une raideur hybride entre circonférentielle et transversale.

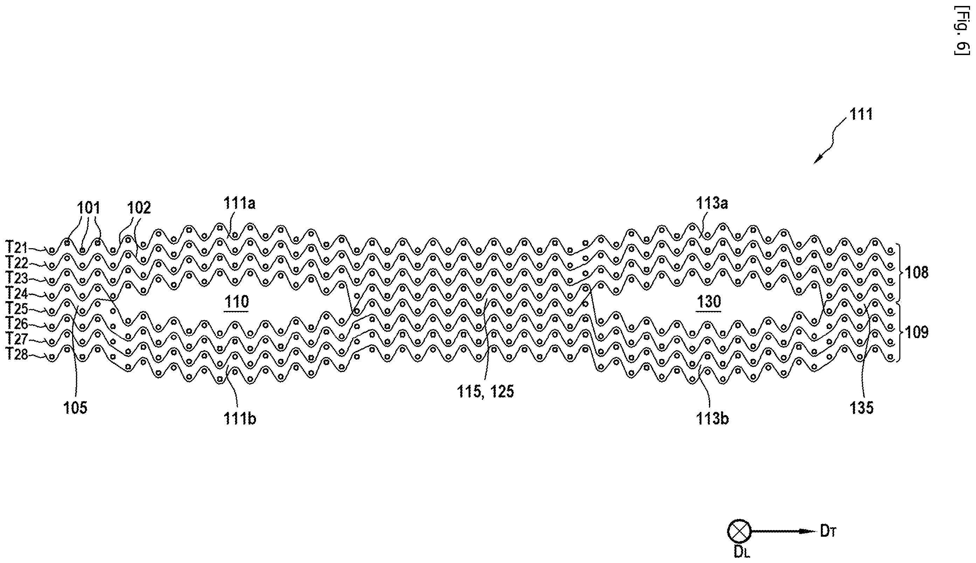

La figure 6 est une vue partielle agrandie d'un plan en coupe chaîne dans la troisième zone Z3 de l'ébauche fibreuse 100 (coupe VI-VI sur la figure 2). Dans la troisième zone Z3, les 8 couches de fils de chaîne 101 sont liées par des fils de trame T₂₁ à T₂₈ dans les zones de liaison 105, 115, 125 et 135 de la partie de profil aérodynamique 111 de l'ébauche fibreuse 100, les fils de trame T₂₁ à T₂₈ s'étendant sensiblement dans la direction transversale D_{T}.

Le premier ensemble 108 et le deuxième ensemble 109 de couches de fils de chaîne 101 sont disposés de part et d'autre de la deuxième déliaison 110 et de la troisième déliaison 130 suivant la direction d'épaisseur, c'est-à-dire suivant la direction perpendiculaire aux directions transversale D_{T} et longitudinale D_{L}.

Ainsi, la première portion tissée 111a et la troisième portion tissée 113a de la partie de profil aérodynamique 111 comprennent chacune une partie du premier ensemble 108 de fils de chaîne 101, et la deuxième portion tissée 111b et la quatrième portion tissée 113b de la partie de profil aérodynamique 111 comprennent chacune une partie du deuxième ensemble 109 de fils de chaîne. Le premier ensemble 108 et le deuxième ensemble 109 de couches de fils de chaîne 101 se joignent dans les zones de liaison 105, 115, 125 et 135.

La troisième zone de liaison 105, la deuxième déliaison 110, la zone commune des première et deuxième zones de liaison 115 et 125, la troisième déliaison 130 et la quatrième zone de liaison 135 se succèdent dans cet ordre selon la direction transversale D_{T} dans la troisième zone Z3.

Comme illustré sur la figure 6, de préférence, seuls deux fils de trame T₂₄, T₂₅ par plan se croisent, ces deux fils étant situés à cœur de la partie de profil aérodynamique 111 et traversant la partie de profil aérodynamique 111 sensiblement suivant la direction transversale D_{T} le long des frontières des deuxième et troisième déliaison 110 et 130. De préférence, six fils de trame au plus par plan se croisent dans la troisième zone Z3, de préférence le long des frontières des deuxième et troisième déliaison 110 et 130.

Ainsi, dans la troisième zone Z3, les deux fils de trame T₁₄, T₁₅ se croisent de préférence dans la troisième zone de déliaison 105, deux fois dans la zone commune des première et deuxième zones de liaison 115 et 125 et dans la quatrième zone de liaison 135, comme illustré sur la figure 6.

Les deux fils de trame T₂₄, T₂₅ sont donc déviés au début ou en amont de la deuxième déliaison 110 suivant la direction transversale D_{T}, puis déviés à nouveau à la sortie ou en aval de la deuxième déliaison 110 suivant la direction transversale D_{T}, puis déviés au début ou en amont de la troisième déliaison 130 suivant la direction transversale D_{T}, puis déviés à nouveau à la sortie ou en aval de la troisième déliaison 130 suivant la direction transversale D_{T}.

Ainsi, les fils de trame T₂₁ à T₂₃ lient le premier ensemble 108 de fils de chaîne 101 dans toute la largeur de la partie de profil aérodynamique 111 suivant la direction transversale D_{T}. Les fils de trame T₂₁ à T₂₃ lient donc le premier ensemble 108 de fils de chaîne 101 dans la troisième zone de liaison 105, dans la première portion tissée 111a, dans les première et deuxième zones de liaison 115 et 125, dans la troisième portion tissée 113a et dans la quatrième zone de liaison 135.

A l'inverse, les fils de trame T₂₆ à T₂₈ lient le deuxième ensemble 109 de fils de chaîne 101 dans toute la largeur de la partie de profil aérodynamique 111 suivant la direction transversale D_{T}. Les fils de trame T₂₆ à T₂₈ lient donc le deuxième ensemble 109 de fils de chaîne 101 dans la troisième zone de liaison 105, dans la deuxième portion tissée 111b, dans les première et deuxième zones de liaison 115 et 125, dans la quatrième portion tissée 113b et dans la quatrième zone de liaison 135.

Un tel croisement partiel des fils de trame dans la partie intermédiaire de la partie de profil aérodynamique 111 améliore la tenue de l'ébauche fibreuse 100 autour des deux déliaisons 110 et 130, et permet ultérieurement de conférer une transition encore plus douce entre la raideur circonférentielle du pied de l'aube et la raideur transversale du haut du profil aérodynamique, en proposant une raideur hybride entre circonférentielle et transversale.

Dans la cinquième zone Z5, on retrouve un tissage tridimensionnel classique qui présente par conséquent une raideur majoritairement transversale.

Une fois le tissage terminé, les fils non tissés présents autour de l'ébauche fibreuse 100 sont découpés pour extraire l'ébauche. Les deuxième, première et troisième déliaisons 110, 120, 130 forment respectivement dans la première ébauche fibreuse 100 un deuxième, un premier et un troisième logements internes qui s'étendent dans la première ébauche fibreuse 100.

Pour former la préforme fibreuse 1 de l'aube à réaliser, on met en forme l'ébauche fibreuse 100. Ainsi, la partie de profil aérodynamique 111 de l'ébauche fibreuse 100 est mise en forme pour former une préforme de profil aérodynamique 11 de la préforme 1, et la partie de pied 112 de l'ébauche fibreuse 100 est mise en forme pour former une préforme de pied 12 de la préforme 1.

De préférence, la mise en forme de l'ébauche fibreuse 100 est réalisée par l'insertion d'au moins un premier élément d'insertion 20 dans la première déliaison 120. De préférence, un ou plusieurs deuxièmes et troisièmes éléments d'insertion 10, 30 peuvent également être insérés respectivement par les deuxième et troisième déliaisons 110, 130 dans la partie de profil aérodynamique 111 de l'ébauche fibreuse 100. Ces éléments d'insertions 10, 20, 30 peuvent être destinés à faire partie de la pièce finale, ou être destinés à être retirés après l'opération de densification de la préforme fibreuse 1.

Les éléments d'insertion 10, 20, 30 peuvent être réalisés en mousse ou présenter au moins partiellement une architecture en treillis. Les éléments d'insertion 10, 20, 30 peuvent également être réalisés au moins partiellement dans un matériau fugace, c'est-à-dire un matériau qui peut être éliminé mécaniquement, chimiquement ou thermiquement.

Les éléments d'insertion 10, 20, 30 sont de préférence réalisés dans un matériau non structurel. Les éléments d'insertion 10, 20, 30 pouvant être destinés à faire partie de l'aube finale présentent une masse volumique inférieure à la masse volumique de l'ébauche fibreuse densifiée par la matrice dans l'aube finale. Les éléments d'insertion 10, 20, 30 peuvent être en mousse, par exemple en polyuréthane. Les éléments d'insertion 10, 20, 30 peuvent être en nid d'abeille.

Les éléments d'insertion 10, 20, 30 peuvent être réalisés dans le même matériau. Au moins un des éléments d'insertion 10, 20, 30 peut être réalisé dans un autre matériau qu'un autre des éléments d'insertion 10, 20, 30. De préférence, les deuxième et troisième éléments d'insertion 10, 30 destinés à être insérés dans les deuxième et troisième déliaisons 110, 130 sont réalisés dans un même matériau, et le premier élément d'insertion 20 destiné à être inséré dans la première déliaison 120 est réalisé dans un matériau différent.

La préforme de profil aérodynamique de la préforme fibreuse 1 obtenue présente globalement la forme du profil aérodynamique de l'aube finale. Une étape de compactage peut être réalisée sur la préforme fibreuse 1, par exemple afin de faire varier son épaisseur suivant la direction longitudinale.

On procède ensuite à la densification de la préforme fibreuse 1 réalisée comme décrit précédemment. La densification de la préforme fibreuse 1 destinée à constituer le renfort fibreux de la pièce à fabriquer consiste à combler la porosité de la préforme, dans tout ou partie du volume de celle-ci, par le matériau constitutif de la matrice.

La densification peut être réalisée de façon connue en soi suivant le procédé par voie liquide (CVL). Le procédé par voie liquide consiste à imprégner la préforme par une composition liquide contenant un précurseur du matériau de la matrice. Le précurseur se présente habituellement sous forme d'un polymère, tel qu'une résine époxyde à hautes performances, éventuellement dilué dans un solvant. La préforme est placée dans un moule pouvant être fermé de manière étanche avec un logement ayant la forme de l'aube finale moulée. Ensuite, on referme le moule et on injecte le précurseur liquide de matrice (par exemple une résine) dans tout le logement pour imprégner toute la partie fibreuse de la préforme.

La transformation du précurseur en matrice, à savoir sa polymérisation, est réalisée par traitement thermique, généralement par chauffage du moule, après élimination du solvant éventuel et réticulation du polymère, la préforme étant toujours maintenue dans le moule ayant une forme correspondant à celle de la pièce à réaliser.

Dans le cas de la formation d'une matrice carbone ou céramique, le traitement thermique consiste à pyrolyser le précurseur pour transformer la matrice en une matrice carbone ou céramique selon le précurseur utilisé et les conditions de pyrolyse. A titre d'exemple, des précurseurs liquides de céramique, notamment de SiC, peuvent être des résines de type polycarbosilane (PCS) ou polytitanocarbosilane (PTCS) ou polysilazane (PSZ), tandis que des précurseurs liquides de carbone peuvent être des résines à taux de coke relativement élevé, telles que des résines phénoliques. Plusieurs cycles consécutifs, depuis l'imprégnation jusqu'au traitement thermique, peuvent être réalisés pour parvenir au degré de densification souhaité.

Selon un aspect de l'invention, dans le cas notamment de la formation d'une matrice organique, la densification de la préforme fibreuse peut être réalisée par le procédé bien connu de moulage par transfert dit RTM ("Resin Transfert Moulding"). Conformément au procédé RTM, on place la préforme fibreuse dans un moule présentant la forme extérieure de la pièce à réaliser. Une résine thermodurcissable est injectée dans l'espace interne du moule qui comprend la préforme fibreuse. Un gradient de pression est généralement établi dans cet espace interne entre l'endroit où est injecté la résine et les orifices d'évacuation de cette dernière afin de contrôler et d'optimiser l'imprégnation de la préforme par la résine.

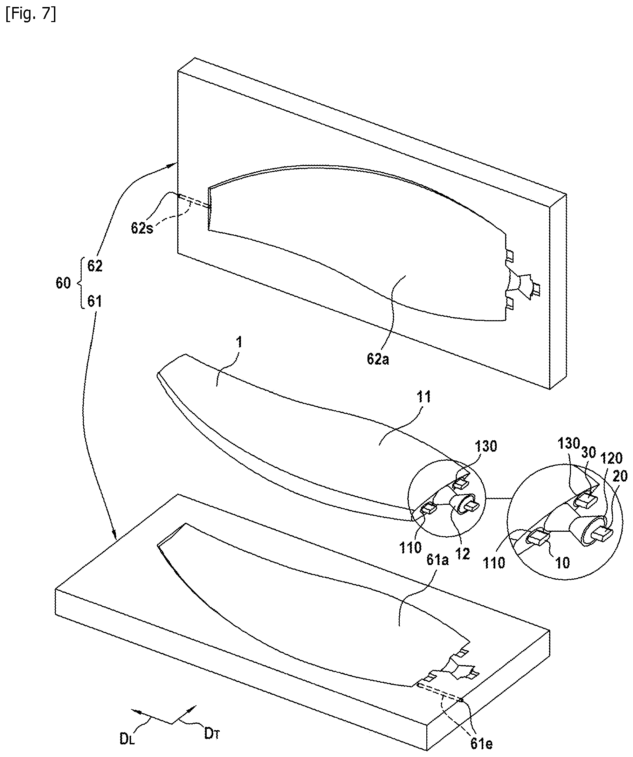

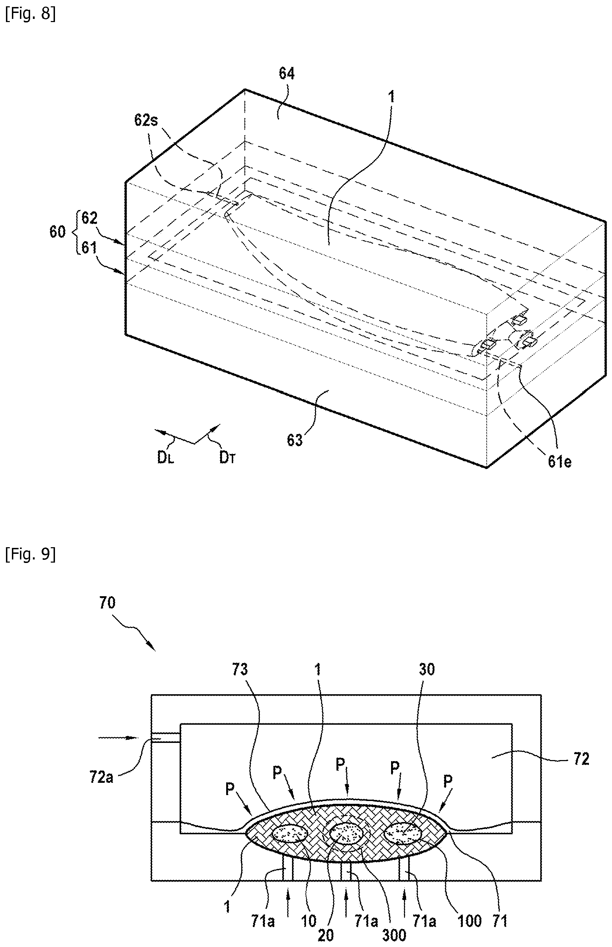

Comme illustré sur les figures 7 et 8, l'injection d'une composition liquide précurseur de matrice dans la préforme fibreuse ainsi que sa transformation en matrice sont ici réalisées dans un outillage d'injection 60 qui comprend une première coquille 61 comprenant en son centre une première empreinte 61a correspondant en partie à la forme et aux dimensions de l'aube à réaliser et une deuxième coquille 62 comprenant en son centre une deuxième empreinte 62a correspondant en partie à la forme et aux dimensions de l'aube à réaliser.

Une fois l'outillage 60 fermé comme illustré sur la figure 8, les première et deuxième empreintes 61a et 62a respectivement des première et deuxième coquilles 61 et 62 définissent ensemble un volume interne ayant la forme de l'aube à réaliser et dans lequel est placée la préforme fibreuse 1. Un compactage de la préforme fibreuse peut être réalisé avec la fermeture de l'outillage 60 afin d'obtenir un taux de fibres déterminé dans la préforme. Dans ce cas, une pression de compactage est appliquée sur les coquilles 61 et 62 par exemple au moyen d'une presse. Le compactage de la préforme fibreuse peut également être réalisé dans un outillage séparé avant l'introduction dans l'outillage d'injection.

L'outillage 60 comprend en outre des moyens permettant de réaliser l'injection d'un précurseur liquide de matrice et la transformation de ce précurseur en matrice. Plus précisément, dans l'exemple décrit ici, la première coquille 61 de l'outillage 60 comprend un port d'injection 61e destiné à permettre l'injection d'une composition liquide précurseur de matrice dans la préforme fibreuse tandis que la deuxième coquille comprend un port d'évacuation 62s destiné à coopérer avec un système de pompage pour la mise sous vide de l'outillage et le tirage d'air lors de l'injection. L'outillage d'injection 60 comprend également une partie inférieure 63 et une partie supérieure 64 entre lesquelles les première et deuxième coquilles 61 et 62 sont placées, la partie inférieure 63 et la partie supérieure 64 étant équipées de moyens de chauffage (non représentés sur la figure 8).

Une fois l'outillage 60 fermé, on procède au moulage de l'aube en imprégnant la préforme 1 avec une résine thermodurcissable que l'on polymérise par traitement thermique. On utilise à cet effet le procédé bien connu de moulage par injection ou transfert dit RTM ("Resin Transfert Moulding"). Conformément au procédé RTM, on injecte via le port d'injection 61e de la première coquille 61 une résine, par exemple une résine thermodurcissable, dans le volume interne occupé par la préforme 1. Le port 62s de la deuxième coquille 62 est relié à un conduit d'évacuation maintenu sous pression (non représentés sur la figure 8). Cette configuration permet l'établissement d'un gradient de pression entre la partie inférieure de la préforme 1 où la résine est injectée et la partie supérieure de la préforme 1 située à proximité du port 62s. De cette manière, la résine injectée sensiblement au niveau de la partie inférieure de la préforme 1 va imprégner progressivement l'ensemble de la préforme en circulant dans celle-ci jusqu'au port d'évacuation 62s par lequel le surplus est évacué. Bien entendu, les première et deuxième coquilles 61 et 62 de l'outillage 60 peuvent comprendre respectivement plusieurs ports d'injection et plusieurs ports d'évacuation.

La résine utilisée peut être, par exemple, une résine époxyde de classe de température 180 °C (température maximale supportée sans perte de caractéristiques). Les résines adaptées pour les procédés RTM sont bien connues. Elles présentent de préférence une faible viscosité pour faciliter leur injection dans les fibres. Le choix de la classe de température et/ou la nature chimique de la résine est déterminé en fonction des sollicitations thermomécaniques auxquelles doit être soumise la pièce. Une fois la résine injectée dans tout le renfort, on procède à sa polymérisation par traitement thermique conformément au procédé RTM.

La densification de la préforme fibreuse peut également être réalisée de manière bien connue par injection sous membrane, comme illustré sur la figure 9. Ce mode d'injection permet une maîtrise complète de la quantité de résine ou de barbotine injectée, assurant ainsi un taux volumique de fibres précis et adaptée. Par conséquent, les caractéristiques mécaniques de la pièce ainsi fabriquée sont améliorées, avec une faible variabilité d'une pièce à l'autre.

La préforme fibreuse 1 est disposée dans un moule 70, qui comprend d'une part une chambre d'imprégnation 71 dans laquelle est disposée la préforme fibreuse afin d'être densifiée par une matrice par l'injection d'un fluide d'imprégnation par le biais des orifices d'injection 71a, et d'autre part une chambre de compaction 72 dans laquelle un fluide de compression est injecté par le biais des orifices d'injection 72a afin d'appliquer une pression sur la préforme fibreuse 1 durant sa densification par la matrice. La chambre d'imprégnation 71 et la chambre de compaction 72 sont séparées par une membrane souple 73. La membrane 73 permet d'appliquer la pression sur la préforme fibreuse 1 installée dans la chambre d'imprégnation 71, le fluide de compression appliquant une pression P sur la membrane 73 qui se déforme et applique ainsi à son tour une pression sur la préforme fibreuse 1. La membrane souple 73 est par exemple réalisée en silicone.

Selon la taille, l'épaisseur et la forme de l'aube ou de la pale d'hélice à fabriquer, on privilégiera une séquence d'injection des fluides de compression et d'imprégnation différente.

Par exemple, on peut commencer par injecter le fluide d'imprégnation, par exemple une résine, dans la chambre d'imprégnation où est disposée la préforme fibreuse. Une fois l'injection du fluide d'imprégnation terminée, on injecte le fluide de compression, par exemple de l'eau, dans la chambre de compaction de sorte à exercer une pression sur la membrane souple. La membrane souple applique ainsi une pression sur la préforme fibreuse, permettant de faire pénétrer le fluide d'imprégnation dans ladite préforme.

La préforme est ensuite soumise à un traitement thermique alors que la pression exercée par la membrane est maintenue, afin de former une matrice dans les porosités de la préforme fibreuse.

Selon un autre exemple, on peut commencer par injecter le fluide de compression dans la chambre de compaction. Ainsi, avant même l'injection du fluide d'imprégnation, on applique déjà par le biais de la membrane souple une pression sur la préforme fibreuse dont la valeur permet d'obtenir le taux volumique de fibre souhaité. On débute ensuite l'injection du fluide d'imprégnation, qui peut être réalisée alors que l'on continue à injecter du fluide de compression afin de compenser les pertes de charges, particulièrement dans le cas où le fluide d'imprégnation est une barbotine. Une telle séquence d'injection est par exemple décrite dans le document WO 2019/197757 A1.

Après l'injection et la polymérisation, l'aube est démoulée.

De préférence, le ou les premiers éléments d'insertion 20 sont retirés de manière à obtenir un pied d'aube creux. Le ou les deuxièmes et troisièmes éléments d'insertion 10, 30 peuvent également être retirés pour obtenir un profil aérodynamique d'aube au moins partiellement creux. Si des éléments d'insertion en matériau fugace avaient été insérés dans la préforme fibreuse, ils peuvent être éliminés lors de la polymérisation de la résine, ou être éliminés lors du démoulage ou après le démoulage de l'aube. Enfin, un ou plusieurs éléments d'insertion 10, 20, 30 peuvent être conservés dans l'aube.

Une étape de détourage ou d'usinage peut être effectuée sur la pièce réalisée pour obtenir l'aube ou la pale d'hélice à réaliser.

Les procédés de densification décrits ci-avant permettent de réaliser, à partir des préformes fibreuses de l'invention, principalement des aubes ou pales d'hélices en matériau composite à matrice organique (CMO), à matrice carbone (C/C) et à matrice céramique (CMC).

## Revendications

1. Procédé de fabrication d'une aube ou pale d'hélice en matériau composite comprenant un renfort fibreux densifié par une matrice, le procédé comprenant :
- la réalisation par tissage tridimensionnel entre une pluralité de fils de chaîne (101) et une pluralité de fils de trame (102) d'une ébauche fibreuse (100) en une seule pièce, l'ébauche fibreuse (100) présentant une forme plate dans laquelle les fils de chaîne (101) s'étendent suivant une direction longitudinale (D_{L}) correspondant à la direction d'envergure de l'aube ou la pale d'hélice à fabriquer et dans laquelle les fils de trame (102) s'étendent suivant une direction transversale (D_{T}) correspondant à la direction de corde de l'aube ou la pale d'hélice à fabriquer, l'ébauche fibreuse (100) comprenant une partie de profil aérodynamique (111) et une partie de pied (112) destinées à former respectivement au moins une partie du renfort fibreux du profil aérodynamique et du pied de l'aube ou de la pale d'hélice,
- la mise en forme de l'ébauche fibreuse (100) pour obtenir une préforme fibreuse (1) en une seule pièce comprenant une préforme de profil aérodynamique formée par la partie de profil aérodynamique (111) de l'ébauche fibreuse (100) et une préforme de pied formée par la partie de pied (112) de l'ébauche fibreuse (100),
- la densification de la préforme fibreuse (1) par une matrice pour obtenir une aube ou une pale d'hélice en matériau composite ayant un renfort fibreux constitué par la préforme fibreuse (1) et densifié par la matrice, et formant une seule pièce avec pied intégré,
**caractérisé en ce que** la partie de pied (112) de l'ébauche fibreuse (100) comprend une première déliaison (120) délimitant un premier logement interne débouchant à une extrémité libre (102c) de ladite partie de pied (112) et s'étendant suivant la direction longitudinale (D_{L}), et **en ce que** la partie de pied (112) comporte au moins une sous-zone évolutive (Z1b) s'étendant depuis la partie de profil aérodynamique (111) et dans laquelle une pluralité de fils de trame (Tₜ₃, Tₜ₄, Tₜ₅, Tₜ₆) situés à l'intérieur de la partie de pied (112) de l'ébauche fibreuse (100) se croise de part et d'autre de la première déliaison (120) suivant la direction transversale (D_{T}), le nombre de fils de trame se croisant de part et d'autre de la première déliaison (120) suivant la direction transversale (D_{T}) dans ladite sous-zone évolutive (Z1b) augmentant progressivement de la partie de profil aérodynamique (111) vers l'extrémité libre (102c) de la partie de pied (112).

2. Procédé de fabrication selon la revendication 1, dans lequel la partie de pied (112) comporte en outre une sous-zone d'extrémité (Z1a) s'étendant entre l'extrémité libre (102c) de la partie de pied (112) et la sous-zone évolutive (Z1b) et dans laquelle la totalité des fils de trame intérieurs (T₂, T₃, T₄, T₅, T₆, T₇) se croise de part et d'autre de la première déliaison (120) suivant la direction transversale (D_{T}).

3. Procédé de fabrication selon la revendication 1 ou 2, dans lequel la partie de profil aérodynamique (111) de l'ébauche fibreuse (100) comprend une deuxième et une troisième déliaisons (110, 130) délimitant un deuxième et un troisième logements internes débouchant sur un même bord de la partie de profil aérodynamique (111) de l'ébauche (100) de part et d'autre de la partie de pied (112) de l'ébauche fibreuse (100) suivant la direction transversale (D_{T}).

4. Procédé de fabrication selon l'une quelconque des revendications 1 à 3, dans lequel la première déliaison (120) s'étend également dans la partie de profil aérodynamique (111) de l'ébauche fibreuse (100).

5. Procédé de fabrication selon la revendication 4, dans lequel au plus six fils de trame (T₁₄, T₁₅) par plan se croisent de part et d'autre de la première déliaison (120) suivant la direction transversale (D_{T}) dans la partie de profil aérodynamique (111) de l'ébauche fibreuse (100).

6. Procédé de fabrication selon la revendication 5, dans lequel uniquement deux fils de trame (T₁₄, T₁₅) par plan se croisent de part et d'autre de la première déliaison (120) suivant la direction transversale (D_{T}) dans la partie de profil aérodynamique (111) de l'ébauche fibreuse (100).

7. Procédé de fabrication l'une quelconque des revendications 1 à 6, dans lequel l'ébauche fibreuse (100) est réalisée par tissage tridimensionnel présentant une armure interlock.

8. Procédé de fabrication selon l'une quelconque des revendications 1 à 7, dans lequel la mise en forme de l'ébauche fibreuse (100) est réalisée par l'insertion d'un élément d'insertion (10, 20, 30) dans chaque déliaison (110, 120, 130) de l'ébauche fibreuse (100).

9. Aube ou pale d'hélice en matériau composite comprenant un renfort fibreux densifié par une matrice, l'aube ou la pale d'hélice comportant suivant une direction longitudinale (D_{L}) un pied et un profil aérodynamique, et s'étendant suivant une direction transversale (D_{T}) entre un bord d'attaque et un bord de fuite, le renfort fibreux comprenant une préforme fibreuse (1) présentant un tissage tridimensionnel en une seule pièce entre une pluralité de fils de chaîne (101) s'étendant suivant la direction longitudinale (D_{L}) et une pluralité de fils de trame (102) s'étendant suivant la direction transversale (D_{T}), ladite préforme fibreuse (1) comprenant une préforme de pied présente dans le pied et une préforme de profil aérodynamique présente dans le profil aérodynamique de l'aube ou de la pale d'hélice,
caractérisée en en ce que la préforme de pied de la préforme fibreuse (1) comprend une première déliaison (120) délimitant un premier logement interne formant une cavité débouchant à une extrémité libre du pied et en ce que la préforme de pied comporte au moins une portion évolutive s'étendant depuis la préforme de profil aérodynamique et dans laquelle une pluralité de fils de trame (Tₜ₃, Tₜ₄, Tₜ₅, Tₜ₆) situés à l'intérieur de la préforme de pied se croise de part et d'autre du premier logement interne suivant la direction transversale (D_{T}), le nombre de fils de trame se croisant de part et d'autre du premier logement interne suivant la direction transversale (D_{T}) dans ladite portion évolutive augmentant progressivement de la préforme de profil aérodynamique vers l'extrémité libre de la préforme de pied.

10. Aube ou pale d'hélice selon la revendication 9, dans laquelle la préforme de pied comporte en outre une portion d'extrémité s'étendant entre l'extrémité libre de la préforme de pied et la portion évolutive et dans laquelle la totalité des fils de trame intérieurs (T₂, T₃, T₄, T₅, T₆, T₇) se croise de part et d'autre du premier logement interne suivant la direction transversale (D_{T}).

11. Aube ou pale d'hélice selon la revendication 9 ou 10, dans laquelle la préforme de profil aérodynamique de la préforme fibreuse (1) comprend une deuxième et une troisième déliaisons (110, 130) délimitant un deuxième et un troisième logements internes débouchant sur un même bord de la préforme de profil aérodynamique de part et d'autre de la préforme de pied suivant la direction transversale (D_{T}).

12. Aube ou pale d'hélice selon l'une quelconque des revendications 9 à 11, dans laquelle le premier logement interne s'étend également dans la préforme de profil aérodynamique de la préforme fibreuse (1).

13. Aube ou pale d'hélice selon la revendication 12, dans laquelle au plus six fils de trame (T₁₄, T₁₅) par plan se croisent de part et d'autre du premier logement interne suivant la direction transversale (D_{T}) dans la préforme de profil aérodynamique de la préforme fibreuse (1).

14. Aube ou pale d'hélice selon la revendication 13, dans laquelle uniquement deux fils de trame (T₁₄, T₁₅) par plan se croisent de part et d'autre du premier logement interne suivant la direction transversale (D_{T}) dans la préforme de profil aérodynamique de la préforme fibreuse (1).

## Patentansprüche

1. Verfahren zum Herstellen einer Propellerschaufel oder eines Propellerflügels aus einem Verbundmaterial, das eine Faserverstärkung umfasst, die mit einer Matrix verdichtet ist, wobei das Verfahren umfasst:
- Ausbilden durch ein dreidimensionales Geflecht zwischen einer Vielzahl von Kettfäden (101) und einer Vielzahl von Schussfäden (102) eines Faserrohlings (100) aus einem einzigen Stück, wobei der Faserrohling (100) eine flache Form aufweist, in der sich die Kettfäden (101) in einer Längsrichtung (D_{L}) erstrecken, die der Spannweitenrichtung der herzustellenden Propellerschaufel oder des Propellerflügels entspricht, und in der sich die Schussfäden (102) in einer Querrichtung (D_{T}) erstrecken, die der Sehnenrichtung der herzustellenden Propellerschaufel oder des Propellerflügels entspricht, wobei der Faserrohling (100) einen aerodynamischen Profilteil (111) und einen Fußteil (112) umfasst, die dazu bestimmt sind, jeweils mindestens einen Teil der Faserverstärkung des aerodynamischen Profils und des Fußes der Propellerschaufel oder des Propellerflügels zu bilden,
- Formgeben des Faserrohlings (100), um eine Faservorform (1) aus einem einzigen Stück zu erzielen, der eine aerodynamische Profilvorform, die aus dem aerodynamischen Profilteil (111) des Faserrohlings (100) gebildet wird, und eine Fußvorform, die aus dem Fußteil (112) des Faserrohlings (100) gebildet wird, umfasst,
- Verdichten der Faservorform (1) durch eine Matrix, um eine Propellerschaufel oder einen Propellerflügel aus einem Verbundmaterial zu erzielen, das eine Faserverstärkung aufweist, die aus der Faservorform (1) besteht und durch die Matrix verdichtet wird, und ein einziges Stück mit integriertem Fuß bildet,
**dadurch gekennzeichnet, dass** der Fußteil (112) des Faserrohlings (100) eine erste Trennstelle (120) umfasst, die eine erste interne Aufnahme begrenzt, die auf ein freies Ende (102c) des Fußteils (112) ausmündet und sich in der Längsrichtung (D_{L}) erstreckt, und dass der Fußteil (112) mindestens einen progressiven Unterbereich (Z1b) umfasst, der sich von dem aerodynamischen Profilteil (111) aus erstreckt, und in dem sich eine Vielzahl von Schussfäden (Tₜ₃, Tₜ₄, Tₜ₅, Tₜ₆), die sich im Innern des Fußteils (112) des Faserrohlings (100) befinden, auf beiden Seiten der ersten Trennstelle (120) in der Querrichtung (D_{T}) kreuzen, wobei die Anzahl von Schussfäden, die sich auf beiden Seiten der ersten Trennstelle (120) in der Querrichtung (D_{T}) in dem progressiven Unterbereich (Z1b) kreuzen, von dem aerodynamischen Profilteil (111) in Richtung auf das freie Ende (102c) des Fußteils (112) nach und nach zunimmt.

2. Herstellungsverfahren nach Anspruch 1, wobei der Fußteil (112) ferner einen Endunterbereich (Z1a) umfasst, der sich zwischen dem freien Ende (102c) des Fußteils (112) und dem progressiven Unterbereich (Z1b) erstreckt, und in dem sich alle inneren Schussfäden (T₂, T₃, T₄, T₅, T₆, T₇) auf beiden Seiten der ersten Trennstelle (120) in der Querrichtung (D_{T}) kreuzen.

3. Herstellungsverfahren nach Anspruch 1 oder 2, wobei der aerodynamische Profilteil (111) des Faserrohlings (100) eine zweite und eine dritte Trennstelle (110, 130) umfasst, die eine zweite und eine dritte interne Aufnahme begrenzen, die auf den gleichen Rand des aerodynamischen Profilteils (111) des Rohlings (100) auf beiden Seiten des Fußteils (112) des Faserrohlings (100) in der Querrichtung (D_{T}) ausmünden.

4. Herstellungsverfahren nach einem der Ansprüche 1 bis 3, wobei sich die erste Trennstelle (120) ebenfalls in dem aerodynamischen Profilteil (111) des Faserrohlings (100) erstreckt.

5. Herstellungsverfahren nach Anspruch 4, wobei sich höchstens sechs Schussfäden (T₁₄, T₁₅) pro Ebene auf beiden Seiten der ersten Trennstelle (120) in der Querrichtung (D_{T}) in dem aerodynamischen Profilteil (111) des Faserrohlings (100) kreuzen.

6. Herstellungsverfahren nach Anspruch 5, wobei sich nur zwei Schussfäden (T₁₄, T₁₅) pro Ebene auf beiden Seiten der ersten Trennstelle (120) in der Querrichtung (D_{T}) in dem aerodynamischen Profilteil (111) des Faserrohlings (100) kreuzen.

7. Herstellungsverfahren nach einem der Ansprüche 1 bis 6, wobei der Faserrohling (100) durch ein dreidimensionales Geflecht ausgebildet wird, das eine Interlock-Bindung aufweist.

8. Herstellungsverfahren nach einem der Ansprüche 1 bis 7, wobei das Formgeben des Faserrohlings (100) durch das Einsetzen eines Einsatzelements (10, 20, 30) in jede Trennstelle (110, 120, 130) des Faserrohlings (100) ausgebildet wird.

9. Propellerschaufel oder Propellerflügel aus einem Verbundmaterial, das eine Faserverstärkung umfasst, die mit einer Matrix verdichtet ist, wobei die Propellerschaufel oder der Propellerflügel in einer Längsrichtung (D_{L}) einen Fuß und ein aerodynamisches Profil umfasst, und sich in einer Querrichtung (D_{T}) zwischen einer Vorderkante und einer Hinterkante erstreckt, wobei die Faserverstärkung eine Faservorform (1) umfasst, die ein dreidimensionales Geflecht aus einem einzigen Stück zwischen einer Vielzahl von Kettfäden (101), die sich in der Längsrichtung (D_{L}) erstrecken, und einer Vielzahl von Schussfäden (102), die sich in der Querrichtung (D_{T}) erstrecken, aufweist, wobei die Faservorform (1) eine Fußvorform, die in dem Fuß vorhanden ist, und eine aerodynamische Profilvorform, die in dem aerodynamischen Profil der Propellerschaufel oder des Propellerflügels vorhanden ist, umfasst,
**dadurch gekennzeichnet, dass** die Fußvorform der Faservorform (1) eine erste Trennstelle (120) umfasst, die eine erste interne Aufnahme begrenzt, die einen Hohlraum bildet, der auf ein freies Ende des Fußes ausmündet, und dass die Fußvorform mindestens einen progressiven Abschnitt umfasst, der sich von der aerodynamischen Profilvorform aus erstreckt, und in dem sich eine Vielzahl von Schussfäden (Tₜ₃, Tₜ₄, Tₜ₅, Tₜ₆), die sich im Innern der Fußvorform befinden, auf beiden Seiten der ersten internen Aufnahme in der Querrichtung (D_{T}) kreuzen, wobei die Anzahl von Schussfäden, die sich auf beiden Seiten der ersten internen Aufnahme in der Querrichtung (D_{T}) in dem progressiven Abschnitt kreuzen, von der aerodynamischen Profilvorform in Richtung auf das freie Ende der Fußvorform nach und nach zunimmt.

10. Propellerschaufel oder Propellerflügel nach Anspruch 9, wobei die Fußvorform ferner einen Endabschnitt umfasst, der sich zwischen dem freien Ende der Fußvorform und dem progressiven Abschnitt erstreckt, und wobei sich alle inneren Schussfäden (T₂, T₃, T₄, T₅, T₆, T₇) auf beiden Seiten der ersten internen Aufnahme in der Querrichtung (D_{T}) kreuzen.

11. Propellerschaufel oder Propellerflügel nach Anspruch 9 oder 10, wobei die aerodynamische Profilvorform der Faservorform (1) eine zweite und eine dritte Trennstelle (110, 130) umfasst, die eine zweite und eine dritte interne Aufnahme begrenzen, die auf den gleichen Rand der aerodynamischen Profilvorform auf beiden Seiten der Fußvorform in der Querrichtung (D_{T}) ausmünden.

12. Propellerschaufel oder Propellerflügel nach einem der Ansprüche 9 bis 11, wobei sich die erste interne Aufnahme ebenfalls in der aerodynamischen Profilvorform der Faservorform (1) erstreckt.

13. Propellerschaufel oder Propellerflügel nach Anspruch 12, wobei sich höchstens sechs Schussfäden (T₁₄, T₁₅) pro Ebene auf beiden Seiten der ersten internen Aufnahme in der Querrichtung (D_{T}) in der aerodynamischen Profilvorform der Faservorform (1) kreuzen.

14. Propellerschaufel oder Propellerflügel nach Anspruch 13, wobei sich nur zwei Schussfäden (T₁₄, T₁₅) pro Ebene auf beiden Seiten der ersten internen Aufnahme in der Querrichtung (D_{T}) in der aerodynamischen Profilvorform der Faservorform (1) kreuzen.

## Claims

1. A method for manufacturing a propeller blade or vane made of composite material comprising a fibrous reinforcement densified by a matrix, the method comprising:
- making a single-piece fibrous blank (100) by three-dimensional weaving between a plurality of warp yarns (101) and a plurality of weft yarns (102), the fibrous blank (100) having a flat shape in which the warp yarns (101) extend along a longitudinal direction (D_{L}) corresponding to the span direction of the propeller blade or vane to be manufactured and wherein the weft yarns (102) extend along a transverse direction (D_{T}) corresponding to the chord direction of the propeller blade or vane to be manufactured, the fibrous blank (100) comprising an airfoil part (111) and a root part (112) intended to form respectively at least part of the fibrous reinforcement of the airfoil and of the root of the propeller blade or vane,
- shaping the fibrous blank (100) to obtain a single-piece fibrous preform (1) comprising an airfoil preform formed by the airfoil part (111) of the fibrous blank (100) and a root preform formed by the root part (112) of the fibrous blank (100),
- densifying the fibrous preform (1) by a matrix to obtain a propeller blade or vane made of composite material having a fibrous reinforcement constituted by the fibrous preform (1) and densified by the matrix, and forming a single piece with an integrated root,
**characterized in that** the root part (112) of the fibrous blank (100) comprises a first non-interlinking (120) delimiting a first inner housing opening out at a free end (102c) of said root part (112) and extending along the longitudinal direction (D_{L}), and **in that** the root part (112) includes at least one changing sub-area (Z1b) extending from the airfoil part (111) and wherein a plurality of weft yarns (Tₜ₃, Tₜ₄, Tₜ₅, Tₜ₆) located inside the root part (112) of the fibrous blank (100) cross on either side of the first non-interlinking (120) along the transverse direction (D_{T}), the number of weft yarns crossing on either side of the first non-interlinking (120) along the transverse direction (D_{T}) in said changing sub-area (Z1b) increasing gradually from the airfoil part (111) to the free end (102c) of the root part (112).

2. The manufacturing method according to claim 1, wherein the root part (112) further includes an end sub-area (Z1a) extending between the free end (102c) of the root part (112) and the changing sub-area (Z1b) and wherein all of the internal weft yarns (T₂, T₃, T₄, T₅, T₆, T₇) cross on either side of the first non-interlinking (120) along the transverse direction (D_{T}).

3. The manufacturing method according to claim 1 or 2, wherein the airfoil part (111) of the fibrous blank (100) comprises a second and a third non-interlinking (110, 130) delimiting a second and a third inner housing opening out onto the same edge of the airfoil part (111) of the blank (100) on either side of the root part (112) of the fibrous blank (100) along the transverse direction (DT).

4. The manufacturing method according to any one of claims 1 to 3, wherein the first non-interlinking (120) also extends into the airfoil part (111) of the fibrous blank (100).

5. The manufacturing method according to claim 4, wherein at most six weft yarns (T₁₄, T₁₅) per plane cross on either side of the first non-interlinking (120) along the transverse direction (D_{T}) in the airfoil part (111) of the fibrous blank (100).

6. The manufacturing method according to claim 5, wherein only two weft yarns (T₁₄, T₁₅) per plane cross on either side of the first non-interlinking (120) along the transverse direction (D_{T}) in the airfoil part (111) of the fibrous blank (100).

7. The manufacturing method according to any one of claims 1 to 6, wherein the fibrous blank (100) is made by three-dimensional weaving having an interlock weave.

8. The manufacturing method according to any one of claims 1 to 7, wherein the shaping of the fibrous blank (100) is carried out by inserting an insertion element (10, 20, 30) into each non-interlinking (110, 120, 130) of the fibrous blank (100).

9. A propeller blade or vane made of composite material comprising a fibrous reinforcement densified by a matrix, the propeller blade or vane including, along a longitudinal direction (D_{L}), a root and an airfoil, and extending along a transverse direction (D_{T}) between a leading edge and a trailing edge, the fibrous reinforcement comprising a fibrous preform (1) having a three-dimensional weaving in a single piece between a plurality of warp yarns (101) extending along the longitudinal direction (D_{L}) and a plurality of weft yarns (102) extending along the transverse direction (D_{T}), said fibrous preform (1) comprising a root preform present in the root and an airfoil preform present in the airfoil of the propeller blade or vane, **characterized in that** the root preform of the fibrous preform (1) comprises a first non-interlinking (120) delimiting a first inner housing forming a cavity opening out at a free end of the root and **in that** the root preform includes at least one changing portion extending from the airfoil preform and wherein a plurality of weft yarns (Tₜ₃, Tₜ₄, Tₜ₅, Tₜ₆) located inside the root preform cross on either side of the first inner housing along the transverse direction (D_{T}), the number of weft yarns crossing on either side of the first inner housing along the transverse direction (D_{T}) in said changing portion increasing gradually from the airfoil preform to the free end of the root preform.

10. The propeller blade or vane according to claim 9, wherein the root preform further includes an end portion extending between the free end of the root preform and the changing portion and wherein all of the internal weft yarns (T₂, T₃, T₄, T₅, T₆, T₇) cross on either side of the first inner housing along the transverse direction (D_{T}).

11. The propeller blade or vane according to claim 9 or 10, wherein the airfoil preform of the fibrous preform (1) comprises a second and a third non-interlinking (110, 130) delimiting a second and a third inner housing opening out onto the same edge of the airfoil preform on either side of the root preform along the transverse direction (D_{T}).

12. The propeller blade or vane according to any one of claims 9 to 11, wherein the first inner housing also extends into the airfoil preform of the fibrous preform (1).

13. The propeller blade or vane according to claim 12, wherein at most six weft yarns (T₁₄, T₁₅) per plane cross on either side of the first inner housing along the transverse direction (D_{T}) in the airfoil preform of the fibrous preform (1).

14. The propeller blade or vane according to claim 13, wherein only two weft yarns (T₁₄, T₁₅) per plane cross on either side of the first inner housing along the transverse direction (D_{T}) in the airfoil preform of the fibrous preform (1).
